# EUROPEAN PATENT APPLICATION

(11) **EP 4 242 099 A2**
(43) Date of publication of application: **13.09.2023**
(21) Application number: 23173094.6
(22) Date of filing: 29.07.2022
(51) Int. Cl.: B63H 25/02

(54) **WATERCRAFT CONTROL METHOD, WATERCRAFT CONTROL PROGRAM, WATERCRAFT CONTROL SYSTEM, AND WATERCRAFT**

(30) Priority: 03.08.2021 JP 2021127277
(62) Divisional of application: 22187750.9
(71) Applicant: Yanmar Holdings Co., Ltd., Osaka-shi, Osaka (JP)
(72) Inventor: KANDA, Shoma, Kunisaki-shi (JP); NAEGA, Toshiaki, Kunisaki-shi (JP); KANDA, Koichi, Kunisaki-shi (JP); YAMADA, Yasuhiro, Kunisaki-shi (JP)
(74) Representative: Dennemeyer & Associates S.A.

(57) **Abstract**

[Problem] To provide a control method for a watercraft, a watercraft control program, a watercraft control system, and a watercraft capable of easily improving convenience of a user in relation to activation of a device that requires authentication for activation.

[Solution] A control method for a watercraft 10 is used for a watercraft 10 including a device that requires authentication of identification information for activation, and has reading processing, authentication processing, and activation permission processing. In the reading processing, the identification information is read by each of plural reading sections 21, each of which is mounted on a hull of the watercraft 10 and can read the identification information. In the authentication processing, the identification information, which is read in the reading processing, is authenticated by referring to authentication information. In the activation permission processing, in the case where the identification information that is read by any one of the plural reading sections 21 is successfully authenticated, the device is brought into an activatable state.

## Description

### TECHNICAL FIELD

The present disclosure relates to a control method for a watercraft including a device that requires authentication of identification information for activation, a watercraft control program, a watercraft control system, and a watercraft.

### BACKGROUND ART

As the related art, a watercraft, to which a keyless entry control system for an outboard engine is applied, has been known (for example, see Patent Document 1). In the watercraft according to the related art, the keyless entry control system is driven when a user (a watercraft operator) turns on an ignition while carrying a mobile device. When the keyless entry control system is driven, first, a keyless controller executes first authentication processing with the mobile device. In the first authentication processing, for example, authentication codes that are registered in advance in the mobile device and the keyless controller are checked against each other. In other words, in the first authentication processing, the mobile device and the keyless controller are checked against each other.

Furthermore, in the watercraft according to the related art, in the case where an authentication result by the first authentication processing is OK, the keyless controller allows electric power supply to an engine control module (ECM) and executes second authentication processing with the ECM. In the second authentication processing, the authentication codes that are registered in advance in the keyless controller and the ECM are checked against each other. In other words, in the second authentication processing, the keyless controller and the ECM are checked against each other. In the case where an authentication result by the second authentication processing is OK, the ECM can execute control for an engine (a start or the like of the engine) that is installed in the outboard engine.

### PRIOR ART DOCUMENT

### PATENT DOCUMENT

Patent Document 1: Japanese Unexamined Patent Application No. 2016-74265

### SUMMARY OF INVENTION

### TECHNICAL PROBLEM

In the above related art, the first authentication processing can be executed through wireless communication between the mobile device and the keyless controller. Thus, in order to activate (start) a device such as the outboard engine, the user who holds the mobile device has to be located near the keyless controller and turn on the ignition. For this reason, for example, in the case where a hull of the watercraft is relatively large, or the like, the user has to go all the way to an installation position of the keyless controller while carrying the mobile device in order to activate the device (the outboard engine or the like) that requires authentication for activation, which possibly makes the user feel inconvenient.

An object of the present disclosure is to provide a control method for a watercraft, a watercraft control program, a watercraft control system, and a watercraft capable of easily improving convenience of a user in relation to activation of a device that requires authentication for activation.

### SOLUTION TO PROBLEM

A control method for a watercraft according to one aspect of the present disclosure is used for a watercraft including a device that requires authentication of identification information for activation, and has reading processing, authentication processing, and activation permission processing. In the reading processing, the identification information is read by each of plural reading sections, each of which is mounted on a hull of the watercraft and can read the identification information. In the authentication processing, the identification information, which is read in the reading processing, is authenticated by referring to authentication information. In the activation permission processing, in the case where the identification information that is read by any one of the plural reading sections is successfully authenticated, the device is brought into an activatable state.

A control method for a watercraft according to one aspect of the present disclosure is used for a watercraft including a device that requires authentication of identification information for activation, and has reading processing, authentication processing, and registration processing. In the reading processing, the identification information is read by a reading section that is mounted on a hull of the watercraft and can read the identification information. In the authentication processing, the identification information, which is read in the reading processing, is authenticated by referring to authentication information. In the registration processing, the identification information is registered as the authentication information. In the registration processing, plural pieces of the authentication information can be registered.

A watercraft control program according to one aspect of the present disclosure is a program for causing one or more processors to execute the control method for a watercraft.

A watercraft control system according to one aspect of the present disclosure is used for a watercraft including a device that requires authentication of identification information for activation, and has plural reading sections, an authentication section, and an activation permission processing section. The plural reading sections are mounted on a hull of the watercraft and is configured to be able to read the identification information. The authentication section authenticates the identification information by referring to authentication information. The activation permission processing section brings the device into an activatable state in the case where the identification information, which is read by any one of the plural reading sections, is successfully authenticated.

A watercraft according to one aspect of the present disclosure includes the watercraft control system and the hull.

### ADVANTAGEOUS EFFECTS OF INVENTION

According to the present disclosure, it is possible to provide the control method for a watercraft, the watercraft control program, the watercraft control system, and the watercraft capable of easily improving convenience of a user in relation to the activation of the device that requires the authentication for the activation.

### BRIEF DESCRIPTION OF DRAWINGS

Fig. 1 is an external view illustrating a schematic configuration of a watercraft according to a first embodiment.
Fig. 2 is a system configuration diagram illustrating a schematic configuration of a watercraft control system according to the first embodiment.
Fig. 3 is a block diagram illustrating the schematic configuration of the watercraft according to the first embodiment.
Fig. 4 is a schematic diagram illustrating an operation example related to an authentication function in the watercraft control system according to the first embodiment.
Fig. 5 is a schematic diagram illustrating an operation example related to the authentication function in the watercraft control system according to the first embodiment.
Fig. 6 is a schematic diagram illustrating an operation example related to the authentication function in the watercraft control system according to the first embodiment.
Fig. 7 is a flowchart illustrating the operation example related to the authentication function in the watercraft control system according to the first embodiment.
Fig. 8 is a schematic diagram illustrating an operation example related to a registration function in the watercraft control system according to the first embodiment.
Fig. 9 is a schematic diagram illustrating an operation example related to the registration function in the watercraft control system according to the first embodiment.
Fig. 10 is a schematic diagram illustrating an operation example related to the registration function in the watercraft control system according to the first embodiment.
Fig. 11 is an explanatory view illustrating an example of a transition state of a screen shown on a display section of a terminal device in relation to the registration function in the watercraft control system according to the first embodiment.
Fig. 12 is an explanatory view illustrating an example of the transition state of the screen shown on the display section of the terminal device in relation to the registration function in the watercraft control system according to the first embodiment.
Fig. 13 is a flowchart illustrating the operation example related to the registration function in the watercraft control system according to the first embodiment.
Fig. 14 is a system configuration diagram illustrating a schematic configuration of a watercraft control system according to a second embodiment.

### DESCRIPTION OF EMBODIMENTS

A description will hereinafter be made on embodiments of the present disclosure with reference to the accompanying drawings. The following embodiments are examples that embody the present disclosure and are not intended to limit the technical scope of the present disclosure.

### (First Embodiment)

### [1] Overall Configuration

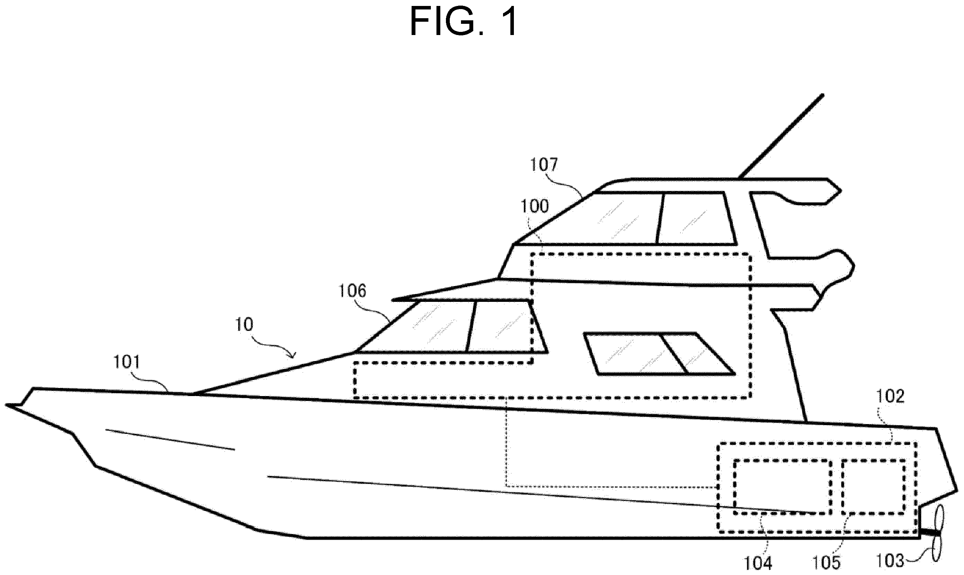

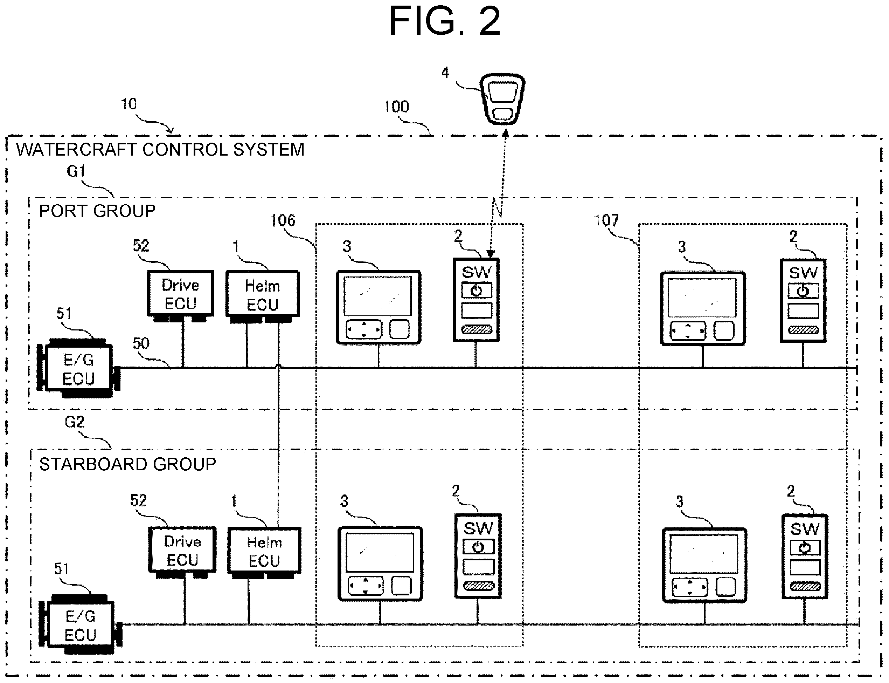

First, a description will be made on an overall configuration of a watercraft 10 according to this embodiment with reference to Fig. 1 and Fig. 2.

The watercraft 10 is a moving body that sails (navigates) on water of the ocean, a lake, a river, or the like. In this embodiment, as an example, the watercraft 10 is a "pleasure boat" that is a small-sized watercraft primarily used for a sport, recreation, or the like. In addition, in this embodiment, the watercraft 10 is configured to be operated according to an operation (including a remote operation) by a person (a navigator). In particular, the watercraft 10 is of a manned type that can be boarded by the person as the navigator.

As illustrated in Fig. 1, the watercraft 10 includes a hull 101 and a watercraft control system 100. The hull 101 includes: a drive unit 102 that generates power; and an output section 103 that outputs a propulsive force for propelling the hull 101. In addition to the above, the hull 101 further includes various on-board facilities such as a navigation device, a rudder mechanism, a communication device, an air conditioner, a lighting device, and an electric power supply device.

The drive unit 102 has: a power source 104 that is used to propel the hull 101; and a power transmission section 105. The power source 104 generates the power (mechanical energy) that is used to propel the hull 101. The power transmission section 105 includes a transmission that is provided between the power source 104 and the output section 103, and has a function of receiving the power generated by the power source 104 and transmitting this power to the output section 103. In this embodiment, the output section 103 includes a propeller, rotates the propeller about a rotation axis (a propeller shaft) when receiving the power generated by the drive unit 102, and thereby outputs the propulsive force for moving the hull 101 in an advancing direction or a reverse direction.

In this embodiment, as an example, the power source 104 is an engine (an internal combustion engine) that generates the power by combusting fuel. In detail, the power source 104 is a diesel engine that is driven by using diesel fuel as the fuel. However, the power source 104 is not limited to the engine and may be a motor (an electric motor) that is supplied with electric power (electrical energy) to generate the power, for example. Further alternatively, the drive unit 102 may be of a hybrid type. In this case, the drive unit 102 has plural types of the power sources 104 such as the engine and the motor. A configuration of the motor provided as the power source 104 is not limited to such a configuration that is supplied with the electric power from a battery. For example, the motor may be configured to generate the power when being supplied with the electric power from a fuel cell, a solar power generation system, or the like. The engine used as the power source 104 is not limited to the diesel engine and may be a gasoline engine, a hydrogen engine, or the like, for example.

The power transmission section 105 has a function of determining whether to transmit the power from the power source 104 to the output section 103, that is, switching between a "transmission state" and a "disconnection state". The "transmission state" is a state where the power source 104 and the output section 103 are mechanically connected to transmit the power from the power source 104 to the output section 103. When the power source 104 is driven in the transmission state of the power transmission section 105, the output section 103 is driven by the power that is generated by the power source 104. Meanwhile, the "disconnection state" is a state where the power source 104 and the output section 103 are mechanically disconnected, so as not to transmit the power from the power source 104 to the output section 103. Even when the power source 104 is driven in the disconnection state of the power transmission section 105, the power generated by the power source 104 is not transmitted to the output section 103, and thus the output section 103 is not driven.

The hull 101 is provided with cockpits 106, 107, each of which is boarded by the navigator. In this embodiment, as an example, the hull 101 has: the cockpit 106 that is installed at a deck height; and the cockpit 107 that is installed on a roof of the cockpit 106. In other words, the hull 101 is provided with the plural cockpits 106, 107 that are the cockpit 106 as a first-floor section and the cockpit 107 as a second-floor section. In each of the cockpits 106, 107, the navigation device, the communication device, the air conditioner, the lighting device, and the like are arranged. The communication device is configured to be communicable with another system (including a server or the like) on the outside of the hull 101, and can exchange data with the other system.

By the way, in this embodiment, various devices such as the drive unit 102 (including the power source 104 and the power transmission section 105), the air conditioner, and the lighting device provided in the watercraft 10 are provided on each of a port side and a starboard side of the hull 101. That is, in regard to the drive unit 102, for example, the watercraft 10 includes the drive unit 102 on the port side and the drive unit 102 on the starboard side. In other words, the plural devices that are provided in the watercraft 10 are classified into two groups G1, G2 or more (see Fig. 2). Here, as an example, the plural devices are classified into the two groups G1, G2 that are the (port) group G1 on the port side of the hull 101 and the (starboard) group G2 on the starboard side thereof.

As illustrated in Fig. 2, the watercraft control system 100 includes a main control section 1 (represented as "Helm ECU" in Fig. 2), a switch panel 2, a terminal device 3, an engine control section 51 (represented as "E/G ECU" in Fig. 2), and a drive control section 52 (represented as "Drive ECU" in Fig. 2). Similar to the devices such as the drive unit 102, each of the components of the watercraft control system 100 is classified into the two groups G1, G2 that are the (port) group G1 on the port side of the hull 101 and the (starboard) group G2 on the starboard side thereof. Furthermore, the switch panel 2 and the terminal device 3 are installed in each of the two cockpits 106. 107. Accordingly, as illustrated in Fig. 2, the watercraft control system 100 includes the two main control sections 1, the four switch panels 2, the four terminal devices 3, the two engine control sections 51, and the two drive control sections 52 in a manner to correspond to the groups G1, G2.

Here, the components (the main control section 1, the switch panel 2, the terminal device 3, the engine control section 51, the drive control section 52, and the like) of the watercraft control system 100 are configured to be communicable via a transmission line 50. Being "communicable" in the present disclosure means that information (data) can be exchanged either directly or indirectly via a communication network (a network), a relay, or the like by an appropriate communication method for wired communication or the wireless communication (communication using a radio wave or light as a medium). The components of the watercraft control system 100 is communicable by the communication method such as a controller area network (CAN). The communication means between the components of the watercraft control system 100 is not limited to the above example, and can be appropriate communication means.

Each of the main control section 1, the engine control section 51, and the drive control section 52 has, as a main component, a computer system that has one or more processors such as a central processing unit (CPU) and one or more units of memory such as read only memory (ROM) and random access memory (RAM), and executes various types of processing (information processing). A detailed description on the watercraft control system 100 will be made in the section of "[2] Configuration of Watercraft Control System".

In addition to the above configuration, the watercraft 10 includes the various electric power supply devices. Each of the electric power supply devices supplies the electric power for operation of at least the watercraft control system 100.

### [2] Configuration of Watercraft Control System

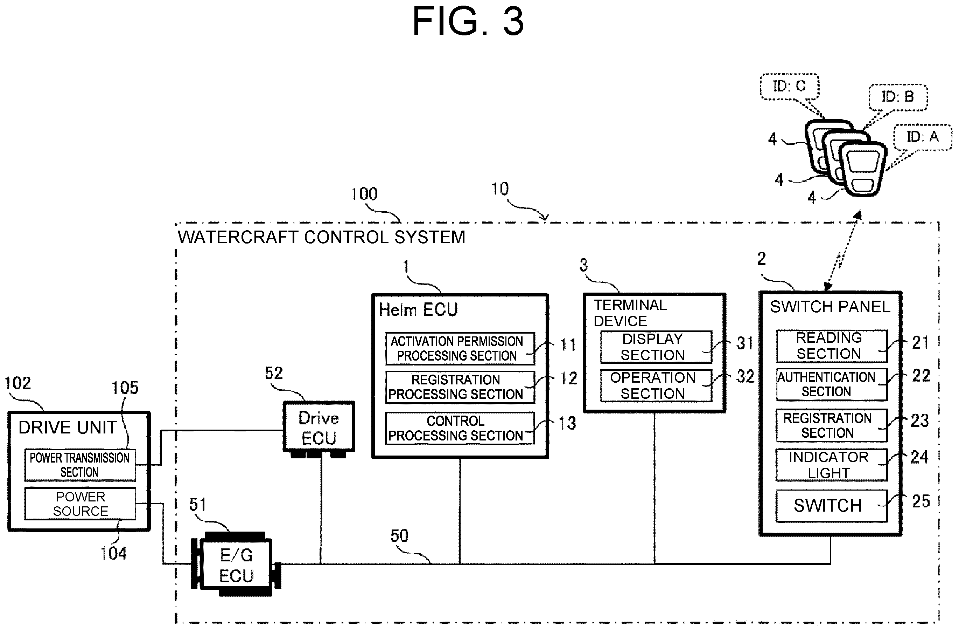

Next, a description will be made on a configuration of the watercraft control system 100 according to this embodiment with reference to Fig. 2 and Fig. 3. Fig. 3 illustrates one each of the main control section 1, the switch panel 2, the terminal device 3, the engine control section 51, and the drive control section 52 that constitute the watercraft control system 100.

The watercraft control system 100 is the component of the watercraft 10 and constitutes the watercraft 10 together with the hull 101. In other words, the watercraft 10 according to this embodiment includes the watercraft control system 100 and the hull 101. As described above, the watercraft control system 100 includes the main control section 1, the switch panel 2, the terminal device 3, the engine control section 51, and the drive control section 52.

The engine control section 51 controls the power source 104. The drive control section 52 controls the power transmission section 105. In this embodiment, the engine control section 51 and the drive control section 52 are provided in each of the groups G1, G2 that are the (port) group G1 on the port side of the hull 101 and the (starboard) group G2 on the starboard side thereof. Accordingly, the engine control section 51 in the group G1 controls the power source 104 in the drive unit 102 that belongs to the same group G1, and the engine control section 51 in the group G2 controls the power source 104 in the drive unit 102 that belongs to the same group G2. Similarly, the drive control section 52 in the group G1 controls the power transmission section 105 in the drive unit 102 that belongs to the same group G1, and the drive control section 52 in the group G2 controls the power transmission section 105 in the drive unit 102 that belongs to the same group G2.

The main control section 1 is an integrated controller that controls each board (the port or the starboard) of the hull 101, and is constructed of an electronic control unit (ECU), for example. Accordingly, the switch panel 2, the terminal device 3, the engine control section 51, and the drive control section 52 constituting the watercraft control system 100 are managed by the main control section 1 for each of the groups G1, G2. Then, the main control section 1 in the group G1 and the main control section 1 in the group G2 communicate with each other to achieve communication between the port and the starboard. However, the main control section 1 may be provided separately from the integrated controller.

By the way, the watercraft 10 according to this embodiment has an immobilizer function, and various functions in the watercraft 10 can be activated on condition that identification information is successfully authenticated (collated). That is, the watercraft control system 100 according to this embodiment has a function of authenticating the identification information when the device in each section of the watercraft 10 is activated.

The watercraft control system 100 according to this embodiment is used for the watercraft 10 including the devices, each of which requires the authentication of the identification information for activation, and includes plural reading sections 21 (see Fig. 3), an authentication section 22 (see Fig. 3), and an activation permission processing section 11 (see Fig. 3). The plural reading sections 21 are mounted on the hull 101 of the watercraft 10 and is configured to be able to read the identification information. The authentication section 22 is configured to authenticate the identification information by referring to authentication information. The activation permission processing section 11 is configured to bring the device into an activatable state when successfully authenticating the identification information that is read by any one of the plural reading sections 21.

In this embodiment, as an example, the reading section 21 and the authentication section 22 are provided to each of the plural switch panels 2, and the activation permission processing section 11 is provided to the main control section 1. The "devices, each of which requires the authentication of the identification information for activation" in the present disclosure include various onboard facilities such as the power source 104 and the power transmission section 105 in the drive unit 102, the navigation device, the rudder mechanism, the communication device, the air conditioner, the lighting device, and the electric power supply device. The "identification information" in the present disclosure is unique information (ID) expressed by characters, numbers, and the like, and is stored in an electronic key 4 (see Fig. 2) carried by the user (the navigator), for example. In short, in the watercraft control system 100 according to this embodiment, the identification information that is read from the electronic key 4 is authenticated, and, when the identification information is successfully authenticated, the device of the watercraft 10 is brought into the activatable state. In addition, the "activatable state" in the present disclosure means a state as a whole where the device can be activated, and examples of the "activatable state" are not only an idling state where the power source 104 including the engine is actually activated when the device is the power source 104 but also a state where the device is activated as soon as a particular activation operation is performed on the switch panel 2.

In this embodiment, as an example, the electronic key 4 is an electronic key (a key) that is used by the user (the navigator) to activate the watercraft 10, is a passive or active RF tag, and has memory that at least stores the identification information. Here, in the plural electronic keys 4, plural types of the identification information (three types of the identification information that are "ID: A", "ID: B", and "ID: C") are associated with each other on a one-to-one basis.

A further detailed description will hereinafter be made on configurations of the main control section 1, the switch panel 2, and the terminal device 3, which are particularly related to the authentication of the identification information for the activation of the device in each of the sections of the watercraft 10, in the watercraft control system 100, with reference to Fig. 3. Although not illustrated in Fig. 3, the main control section 1, the switch panel 2, and the terminal device 3 each have a communication module and the like, and are configured to be mutually communicable via the transmission line 50.

The main control section 1 has the activation permission processing section 11, a registration processing section 12, and a control processing section 13. In this embodiment, the main control section 1 has, as the main component, the computer system having the one or more processors and one or more units of the memory. Accordingly, these plural functional sections (the activation permission processing section 11 and the like) are implemented when the one or more processors execute a watercraft control program. These plural functional sections provided in the main control section 1 may separately be provided in plural casings or may be provided in a single casing. Fig. 3 only illustrates one of the two main control sections 1. However, the same configuration is adopted for the other main control section 1.

The activation permission processing section 11 executes activation permission processing to bring each of the various devices such as the drive unit 102 into the activatable state. The registration processing section 12 executes registration processing to register the authentication information that is used for the authentication of the identification information (in the switch panel 2). The control processing section 13 controls the switch panel 2, the terminal device 3, the engine control section 51, the drive control section 52, and the like under the control of the main control section 1.

The switch panel 2 includes the reading section 21, the authentication section 22, a registration section 23, an indicator light 24, and a switch 25. In this embodiment, the switch panel 2 has a computer system that has one or more processors and one or more units of memory. When the one or more processors execute the watercraft control program, functions of the authentication section 22 and the like are implemented. These plural functional sections provided in the switch panel 2 may separately be provided in plural casings or may be provided in a single casing. Fig. 3 illustrates only one of the four switch panels 2. However, the same configuration is adopted for the rest of the switch panels 2.

The reading section 21 executes reading processing to read the identification information from the electronic key 4. As an example, the reading section 21 is a reader that constitutes a Radio Frequency Identification (RFID) system, communicates with the electronic key 4 by a near-field communication (NFC) method, and thereby reads the identification information that is stored in the electronic key 4. This reading section 21 can read the identification information from the electronic key 4 only in a state where the electronic key 4 is located in a reading area that is set near the switch panel 2. In this way, when the user holds the electronic key 4 over the switch panel 2, the identification information from the electronic key 4 is read by the reading section 21.

The authentication section 22 executes authentication processing to authenticate the identification information, which is read in the reading processing by the reading section 21, by referring to the authentication information. The authentication section 22 can register one or more pieces of the identification information as the authentication information. For example, the authentication section 22 checks the identification information, which is registered (stored) as the authentication information, against the identification information read by the reading section 21. Then, in the case where the identification information match each other, the authentication section 22 determines that the authentication is succeeded. On the other hand, in the case where the identification information, which is registered (stored) as the authentication information, does not match the identification information read by the reading section 21, the authentication section 22 determines that the authentication fails.

The registration section 23 stores the identification information in the memory, and thereby registers the identification information as the authentication information. For example, the indicator light 24 includes a Light Emitting Diode (LED) light source, and provides display according to a lighting state (lit/unlit/blinking, a lighting color, or the like) of the light source. The switch 25 is a push button switch or the like that accepts an operation by the user (the navigator) and outputs an electric signal corresponding to the operation.

The terminal device 3 includes a display section 31 and an operation section 32, and functions as a user interface that outputs/inputs information to/from the user (the navigator). In this embodiment, the terminal device 3 has a computer system that has one or more processors and one or more units of memory. When the one or more processors execute the watercraft control program, a function of showing various types of the information on the display section 31, and the like are implemented. These plural functional sections provided in the terminal device 3 may separately be provided in plural casings or may be provided in a single casing. Fig. 3 illustrates only one of the four terminal devices 3. However, the same configuration is adopted for the rest of the terminal devices 3.

The display section 31 can show various screens including characters, numbers, graphics, and the like, and is constructed of a liquid-crystal display, an organic electroluminescent (EL) display, or the like. The operation section 32 is a part that accepts the user operation, and is constructed of a mechanical switch including a cursor key or the like. However, the operation section 32 is not limited to this example, and may have a touch panel display that serves as the display section 31 and the operation section 32. Furthermore, the terminal device 3 may have an audio output section in addition to or instead of the display section 31, or may have the audio output section in addition to or instead of the operation section 32. The terminal device 3 may be embodied as a general-purpose device such as a smartphone or a tablet terminal.

Here, similar to the drive unit 102 and the like, the main control section 1, the switch panel 2, the terminal device 3, the engine control section 51, and the drive control section 52 as the components of the watercraft control system 100 are at least partially included in the devices, each of which requires the authentication of the identification information for the activation, in the watercraft 10. In this embodiment, as an example, it is assumed that the authentication of the identification information is required for the activation of the switch panel 2, the terminal device 3, the engine control section 51, and the drive control section 52.

Here, it is not essential to include the reading section 21, the authentication section 22, and the like as the components of the watercraft control system 100. For example, the reading section 21, the authentication section 22, and the like may be provided separately from the watercraft control system 100, and may have a configuration that enables communication with the watercraft control system 100.

### [3] Watercraft Control Method

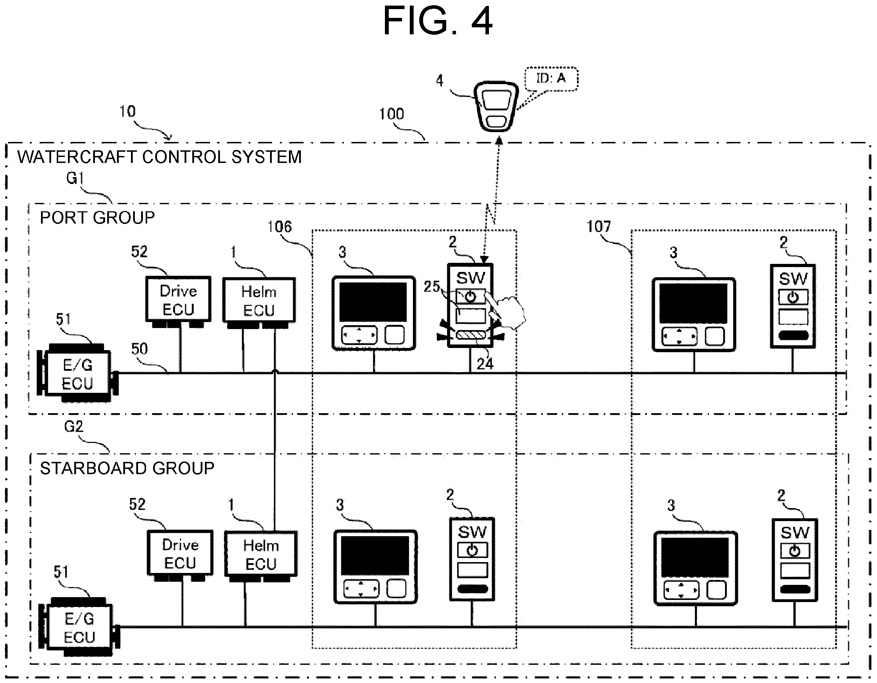

A description will hereinafter be made on an example of a control method for the watercraft 10 (hereinafter also simply referred to as a "control method") that is mainly executed by the watercraft control system 100 with reference to Fig. 4 to Fig. 13.

The control method according to this embodiment is executed by the main control section 1, the switch panel 2, the terminal device 3, each of which includes the computer system, and the like. Thus, in other words, the control method is embodied by the watercraft control program. That is, the watercraft control program according to this embodiment is a computer program for causing the one or more processors to execute each processing related to the control method of the watercraft 10. Such a watercraft control program may cooperatively be executed by the watercraft control system 100, the terminal device 3, and the like, for example.

Here, the control method (for the watercraft 10) according to this embodiment includes: a function of authenticating the identification information for the activation of the device in each of the sections of the watercraft 10 (hereinafter referred to as an "authentication function"); and a function of registering the identification information as the authentication information (hereinafter referred to as a "registration function"). Hereinafter, a description will sequentially be made on the control method related to the authentication function and the control method related to the registration function.

### [3.1] Authentication Function

First, a description will be made on the authentication function with reference to Fig. 4 to Fig. 7.

In the following description, it is assumed that identification information as the authentication information has already been registered in each of the registration sections 23 of the plural (four in this embodiment) switch panels 2. Although a detailed description will be made in the section of "[3.2] Registration Function", in this embodiment, plural pieces of the authentication information can be registered in each of the registration sections 23. Here, it is assumed that three pieces of the authentication information that are identification information "A", "B", and "C" are registered in the registration sections 23 of all of the four switch panels 2. Furthermore, the watercraft 10 is in a state where the electric power supply for each of the sections including the watercraft control system 100 is "off", and thus naturally is in a state where the power source 104 and the like in the drive unit 102 are not activated. However, it is assumed that the communication modules and the like of the main control section 1 and each of the devices (the switch panel 2, the terminal device 3, and the like) can be operated by a standby current. With such assumption, a description will be made on a procedure for the user (the navigator), who possesses the electronic key 4 assigned with the identification information "A", to activate the various devices of the watercraft 10.

As illustrated in Fig. 4, the user performs a specific activation operation on one of the plural (four herein) switch panels 2. Here, as an example, it is assumed that the "activation operation" is to operate an ignition (an electric power supply) switch among the switches 25 on the switch panel 2. In Fig. 4, as an example, the switch panel 2 that belongs to the (port) group G1 and is arranged in the cockpit 106 is operated. However, the present disclosure is not limited to this example, and the user may operate any of the switch panels 2. When the activation operation is performed on any of the switch panels 2, this switch panel 2 is brought into an authentication standby state where the switch panel 2 can authenticate the identification information. In this state, the electric power supply for each of the sections including the watercraft control system 100 still remains "off". The switch panel 2 in the authentication standby state notifies the user of the authentication standby state by causing the indicator light 24 to blink, for example.

Then, as illustrated in Fig. 4, the user holds the electronic key 4, to which the identification information "A" is assigned, over the switch panel 2 in the authentication standby state, that is, the switch panel 2 that belongs to the (port) group G1 and is arranged in the cockpit 106. In this way, the reading section 21 of the switch panel 2 in the authentication standby state communicates with the electronic key 4 and executes the reading processing to read the identification information "A" from the electronic key 4. Furthermore, the authentication section 22 of this switch panel 2 executes the authentication processing to authenticate the read identification information "A" by referring to the authentication information. Here, since the identification information "A", "B", and "C" are registered as the authentication information in the authentication section 22, the identification information "A" matches the authentication information, and the authentication section 22 outputs an authentication result of "authentication success".

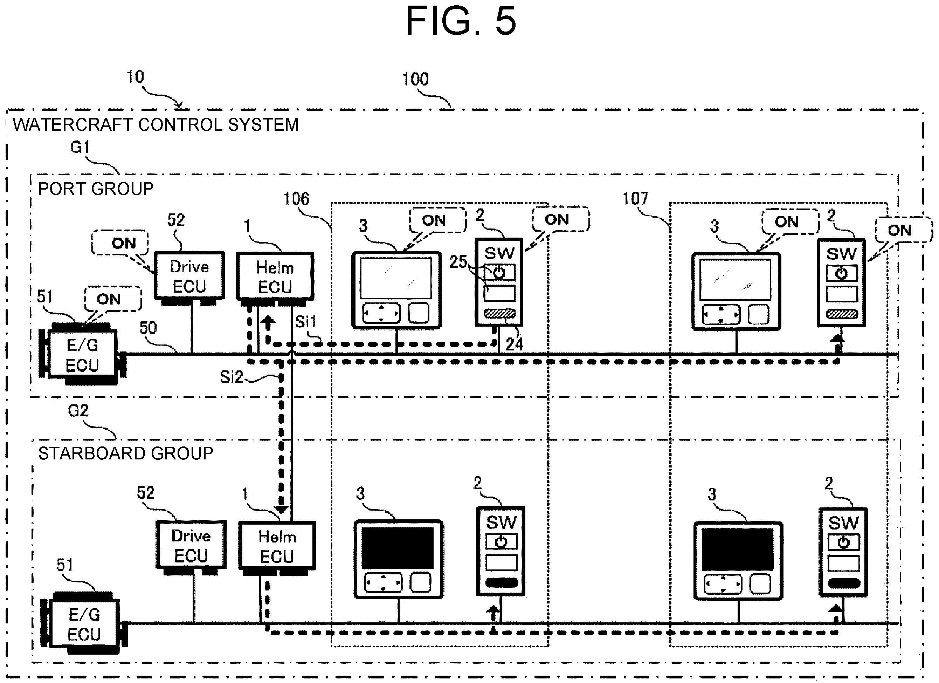

Then, when the authentication is succeeded, as illustrated in Fig. 5, the switch panel 2 that has succeeded in the authentication sends an authentication result signal Si1 indicative of the authentication result (authentication success) to the main control section 1 that belongs to the same group G1. The authentication result signal Si1 only needs to be a signal indicating that the authentication section 22 successfully authenticates the identification information, that is, the identification information read by the reading section 21 matches the authentication information. The authentication result signal Si1 may or may not include the identification information "A" used for the authentication. When receiving the authentication result signal Si1, the activation permission processing section 11 of the main control section 1 turns "on" the electric power supply for each of the sections including the watercraft control system 100. However, at this time, the activation permission processing section 11 of the main control section 1 only turns "on" the electric power supply for each of the devices that belong to the same group G1 as the main control section 1. Accordingly, in the example illustrated in Fig. 5, only the devices on the port side (including the drive unit 102 and the like) are activated while the electric power supply for the devices on the starboard side remains "off".

Furthermore, as illustrated in Fig. 5, the activation permission processing section 11 of the main control section 1 in the group G1 transfers the authentication result signal Si1 as a transfer signal Si2 to the switch panels 2 other than the switch panel 2 as a sending source of the authentication result signal Si1. Similar to the authentication result signal Si1, the transfer signal Si2 is a signal indicating that the authentication section 22 successfully authenticates the identification information, that is, the identification information read by the reading section 21 matches the authentication information. In this way, the result of the authentication processing executed by the switch panel 2, which belongs to the (port) group G1 and is arranged in the cockpit 106, is shared with the other three switch panels 2 via the main control sections 1. Strictly speaking, since the communication between the devices belonging to the group G1 and the devices belonging to the group G2 is made by the main control sections 1, the transfer signal Si2 to the two switch panels 2 belonging to the group G2 is transferred from the main control section 1 in the group G1 through the main control section 1 in the group G2.

In this way, the authentication result of the identification information is shared not only by the switch panel 2 that has read the identification information but is shared among all of the plural (four herein) switch panels 2. For this reason, regardless of a fact that the plural (four herein) reading sections 21 are provided, with the identification information that is read by only one of the reading sections 21, the authentication of the identification information can be completed (succeeded) in the entire watercraft control system 100. Thus, the activation permission processing section 11 of the main control section 1 in the group G1 actually activates the devices in the group G1 and also brings the devices in the group G2 into the activatable state where the authentication is succeeded for the respective device.

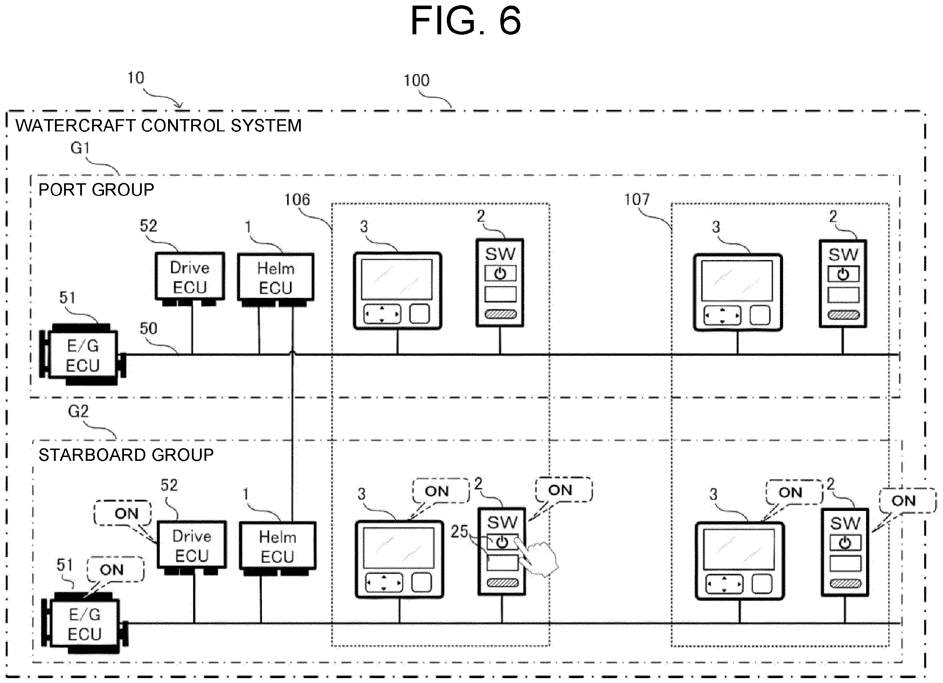

As illustrated in Fig. 6, in this state, the user performs the activation operation on one of the plural (two herein) switch panels 2 that belong to the (starboard) group G2. In Fig. 6, as an example, the switch panel 2 that belongs to the (starboard) group G2 and is arranged in the cockpit 106 is operated. However, the present disclosure is not limited to this example, and the user may operate the switch panel 2 that is arranged in the cockpit 107. When the activation operation is performed on any of the switch panels 2 that belong to the group G2, the main control section 1 that belongs to the same group G2 as this switch panel 2 receives the activation operation of the switch panel 2, and the activation permission processing section 11 of the main control section 1 turns "on" the electric power supply for each of the sections including the watercraft control system 100. However, at this time, the activation permission processing section 11 of the main control section 1 only turns "on" the electric power supply for the devices that belong to the same group G2 as this main control section 1. As a result, in the example illustrated in Fig. 6, the devices (including the drive unit 102 and the like) on the starboard side are activated.

Here, the main control section 1 in the group G2 may send the transfer signal Si2 to the two switch panels 2 that belong to the group G2 after the activation operation is performed on any of the switch panels 2 that belong to the group G2. In this case, the user performs the activation operation on one of the plural (two herein) switch panels 2 that belong to the group G2, so as to bring the switch panel 2 into the authentication standby state. Then, the switch panel 2 in the authentication standby state sends a query signal to the main control section 1 that belongs to the same group G2, and the main control section 1 that receives the query signal sends the transfer signal Si2 to the two switch panels 2 that belong to the group G2. In this way, instead of the reading processing and the authentication processing, the switch panel 2 in the authentication standby state receives the transfer signal Si2, and the authentication by the authentication section 22 is thereby succeeded. Since the switch panel 2 that succeeds in the authentication sends the authentication result signal Si to the main control section 1 that belongs to the same group G2, the main control section 1 receives the authentication result signal Si, and the activation permission processing section 11 then activates the devices that belong to the same group G2.

In any case, in the control method according to this embodiment, the identification information is read by any one of the plural reading sections 21, and it is regarded that the authentication of the entire watercraft control system 100 is succeeded when the identification information is successfully authenticated. Accordingly, in the case where the identification information is read and successfully authenticated by any one of the plural reading sections 21, there is no need to additionally read the identification information by the other reading sections 21 in order to bring all the devices into the activatable state, and the identification information does not have to be additionally authenticated. As a result, when the user holds the electronic key 4 over the switch panel 2, which belongs to the one (port) group G1, as in the above-described example, the user can activate the devices in the entire watercraft 10 without holding the electronic key 4 over the switch panel 2, which belongs to the other (starboard) group G2.

In this embodiment, it is necessary to successfully authenticate the identification information for the activation of the various devices of the watercraft 10. Meanwhile, the authentication of the identification information is unnecessary when the various devices of the watercraft 10 are stopped (the electric power supply is turned off). In addition, in the above example, the user holds the electronic key 4, to which the identification information "A" is assigned, over the switch panel 2. However, similar operation is performed by holding the electronic key 4, to which the identification information "B" or the identification information "C" is assigned, over the switch panel 2. Meanwhile, in the case where the electronic key 4, to which the identification information other than the identification information "A," "B," or "C", is held over the switch panel 2, the identification information is not successfully authenticated. Thus, the various devices of the watercraft 10 are not activated.

As it has been described so far, the control method (for the watercraft 10) according to this embodiment is used for the watercraft 10 including the devices, each of which requires the authentication of the identification information for the activation, and has the reading processing, the authentication processing, and the activation permission processing. In the reading processing, the identification information is read by each of the plural reading sections 21, each of which is mounted on the hull 101 of the watercraft 10 and can read the identification information. In the authentication processing, the identification information that is read in the reading processing is authenticated by referring to the authentication information. In the activation permission processing, in the case where the identification information that is read by any one of the plural reading sections 21 is successfully authenticated, the device is brought into the activatable state.

According to this embodiment, the user can activate the various devices (the power source 104 in the drive unit 102, and the like), each of which requires the authentication of the identification information for the activation, by causing any one of the plural reading sections 21 that are mounted on the hull 101 of the watercraft 10 to read the identification information. That is, for example, even in the case where the hull 101 of the watercraft 10 is relatively large, or the like, the user only needs to cause the closest reading section 21 to the user among the plural reading sections 21 to read the identification information. This has an advantage of easily improving the user's convenience related to the activation of the devices, each of which requires the authentication for the activation.

In this embodiment, the watercraft 10 includes the plural devices that are classified into the two groups G1, G2 or more. The plural devices can be activated for each of the groups G1, G2. The activation permission processing is executed all at once for two groups G1, G2 or more. In short, the various devices such as the drive units 102 (including the power sources 104 and the power transmission sections 105), the air conditioners, and the lighting devices provided in the watercraft 10 are classified into the (port) group G1 on the port side of the hull 101 and the (starboard) group G2 on the starboard side, for example. Then, while the activation permission processing is executed all at once for these two groups G1, G2 or more, the devices are actually activated for each of the groups G1, G2. Thus, as described above, while the authentication is performed all at once for both of the groups G1, G2, the devices can be activated separately for each of the groups G1, G2. In this way, only the devices on the port side (or the starboard side) can be activated.

The authentication processing is executed by each of the plural authentication sections 22 that are provided in a manner to correspond to the plural reading sections 21. Then, in the case where any one of the plural authentication sections 22 succeeds in the authentication, the respective authentication section 22 notifies the other authentication sections 22 of such a fact. For example, as described above, in the case where the identification information is read by the reading section 21 of the switch panel 2 that belongs to the (port) group G1 and is arranged in the cockpit 106, the authentication section 22 of such a switch panel 2 executes the authentication processing. For this reason, the authentication of the identification information is completed locally. Thus, compared to a case where the identification information is sent through a public network, it is possible to enhance security for the authentication.

In the case where the activation of the certain device in the activatable state is requested, such a device is activated without additionally executing the authentication processing. In short, as described above, in the case where the device that belongs to the (starboard) group G2 is already in the activatable state, the activation operation is only performed on the switch panel 2 in the group G2, and the device in the group G2 can be activated without additionally executing the authentication processing. Therefore, compared to a case where the authentication processing has to be executed for plural times, the user's convenience is improved.

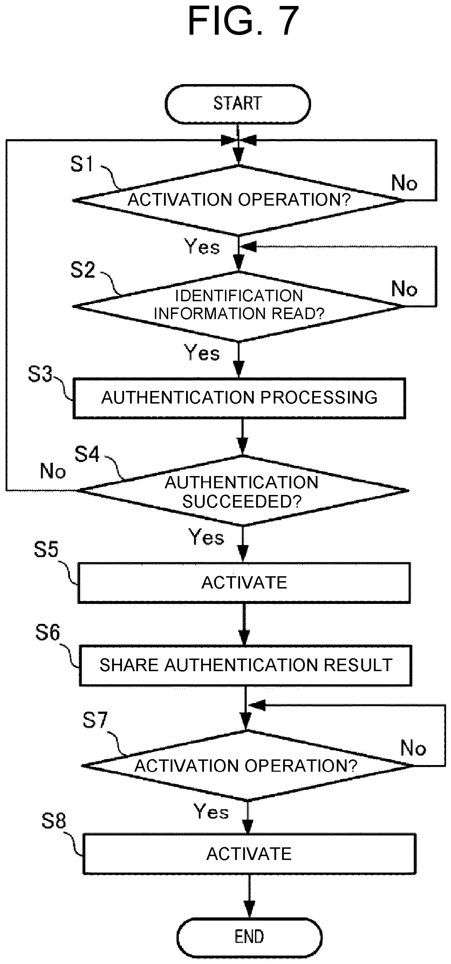

The control method (for the watercraft 10) related to the authentication function that has been described so far will be summarized in a flowchart illustrated in Fig. 7.

That is, in the control method according to this embodiment, first, it is determined whether the activation operation is performed on any one of the plural (four herein) switch panels 2 (S1). If the activation operation is not performed (S1: No), the processing in step S1 is repeated in the control method. If the activation operation is performed (S1: Yes), in the control method, it is determined whether the identification information is read (S2). Here, when the user holds the electronic key 4 over the switch panel 2, the reading section 21 executes the reading processing (S2: Yes), and the processing proceeds to step S3. Since the reading processing is not executed (S2: No) until the user holds the electronic key 4 over the switch panel 2, the processing in step S2 is repeated in the control method.

In step S3, in the control method, the authentication processing is executed by checking the identification information against the authentication information. Here, if the authentication is succeeded (S4: Yes), the processing proceeds to step S5. On the other hand, if the authentication fails (S4: No), the processing returns to step S1. In step S5, the activation permission processing section 11 of the main control section 1 actually activates the device that belongs to the same one of the groups G1, G2 as the switch panel 2, on which the activation operation is performed in step S1. Furthermore, the activation permission processing section 11 shares the authentication result with the other switch panel 2 by sending the transfer signal Si2 indicating the authentication result thereto (S6). At this time point, all the devices of the watercraft 10 are brought into the activatable state.

Then, in the control method, it is determined whether the activation operation is performed on any one of the plural (two herein) switch panels 2 that belongs to different one of the groups G1, G2 from the switch panel 2, on which the activation operation is performed in step S1 (S7). If the activation operation is not performed (S7: No), the processing in step S7 is repeated in the control method. If the activation operation is performed (S7: Yes), the activation permission processing section 11 of the main control section 1 actually activates the device that belongs to the same one of the groups G1, G2 as the switch panel 2, on which the activation operation is performed in step S7 (S8). With this, a series of the processing in the control method related to the authentication function is completed.

The watercraft control system 100 repeatedly executes the processing in above steps S1 to S8. However, the flowchart illustrated in Fig. 7 merely constitutes one example. The processing may appropriately be added or omitted, and an order of the processing may appropriately be changed.

It is not essential that the plural pieces of the authentication information can be registered in the control method related to the authentication function. In the first place, a function of registering the authentication information by the user may not be provided.

### [3.2] Registration Function

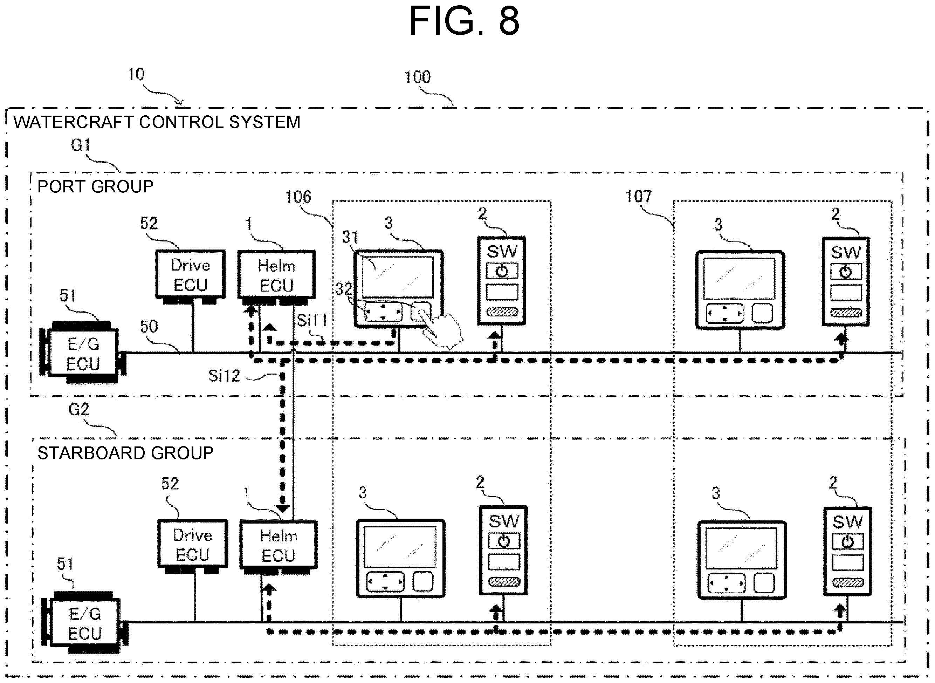

Next, a description will be made on the registration function with reference to Fig. 8 to Fig. 13.

In the following description, it is assumed that the three pieces of the authentication information that are the identification information "A", "B", and "C" are registered in a state where the identification information as the authentication information is registered in none of the registration sections 23 of the plural (four in this embodiment) switch panels 2. In addition, in this embodiment, as an example, it is assumed that each of the registration sections 23 can register up to 10 pieces of the authentication information. Furthermore, in the watercraft 10, the electric power supply for each of the sections including the watercraft control system 100 is "on". With such assumptions, a description will be made on a procedure for registering the authentication information by the user (the navigator) who possesses the three electronic keys 4, to which the identification information "A", "B", and "C" are respectively assigned.

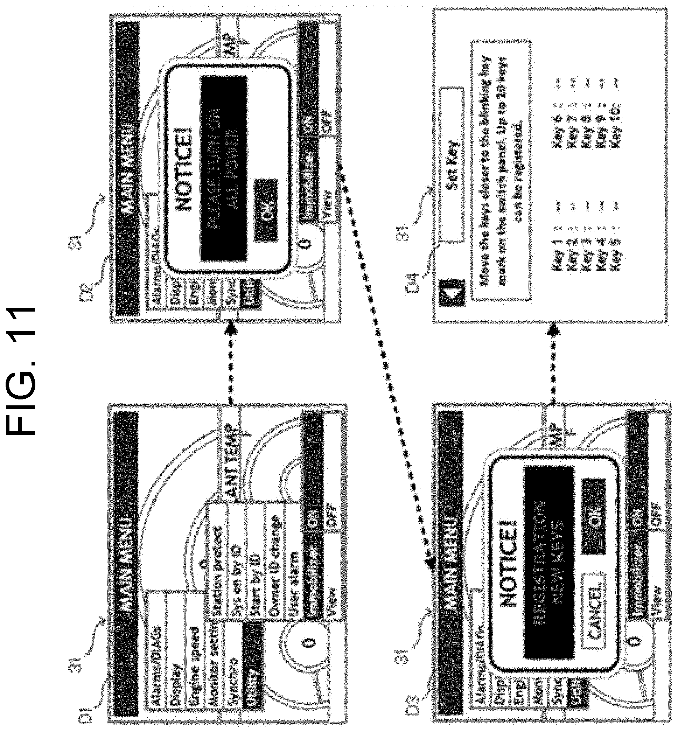

As illustrated in Fig. 8, the user performs a specific mode switching operation for any one of the plural (four herein) terminal devices 3. Here, as an example, the "mode switching operation" is an operation to switch an operation mode of the watercraft control system 100 to a "registration mode" on a menu screen D1 (see Fig. 11) that is shown on the display section 31 of the terminal device 3 by operating the operation section 32 of the terminal device 3. In Fig. 8, as an example, the terminal device 3 that belongs to the (port) group G1 and is arranged in the cockpit 106 is operated. However, the present disclosure is not limited to this example, and the user may operate any of the terminal devices 3. When the mode switching operation is performed for any of the terminal devices 3, a registration request signal Si11 is sent from this terminal device 3 to the main control section 1 that belongs to the same group G1.

When receiving the registration request signal Si11, the registration processing section 12 of the main control section 1 determines whether the operation mode of the watercraft control system 100 can be switched to the registration mode. In this embodiment, as an example, it is determined that the operation mode of the watercraft control system 100 can be switched to the registration mode on a condition that the electric power supply for the devices on each of the port side and the starboard side of the hull 101 is "on" as a registration enable condition. That is, in the case where the electric power supply for the devices on at least one of the port side and the starboard side is "off", the registration processing section 12 determines that the operation mode of the watercraft control system 100 cannot be switched to the registration mode.

Here, the registration processing section 12 of the main control section 1 sends a start request signal Si12 to all of the plural (four herein) switch panels 2, and receives a response from each of the plural switch panels 2 on whether the operation mode of the watercraft control system 100 can be switched to the registration mode. Strictly speaking, since the communication between the devices belonging to the group G1 and the devices belonging to the group G2 is made by the main control sections 1, the start request signal Si12 to the two switch panels 2 belonging to the group G2 is transferred from the main control section 1 in the group G1 through the main control section 1 in the group G2. When determining that the operation mode of the watercraft control system 100 can be switched to the registration mode through the communication with the plural switch panels 2, the registration processing section 12 brings all of the plural switch panels 2 into a registration standby state where the identification information can be registered. The switch panel 2 in the registration standby state may notify the user of the registration standby state by causing the indicator light 24 to blink, for example.

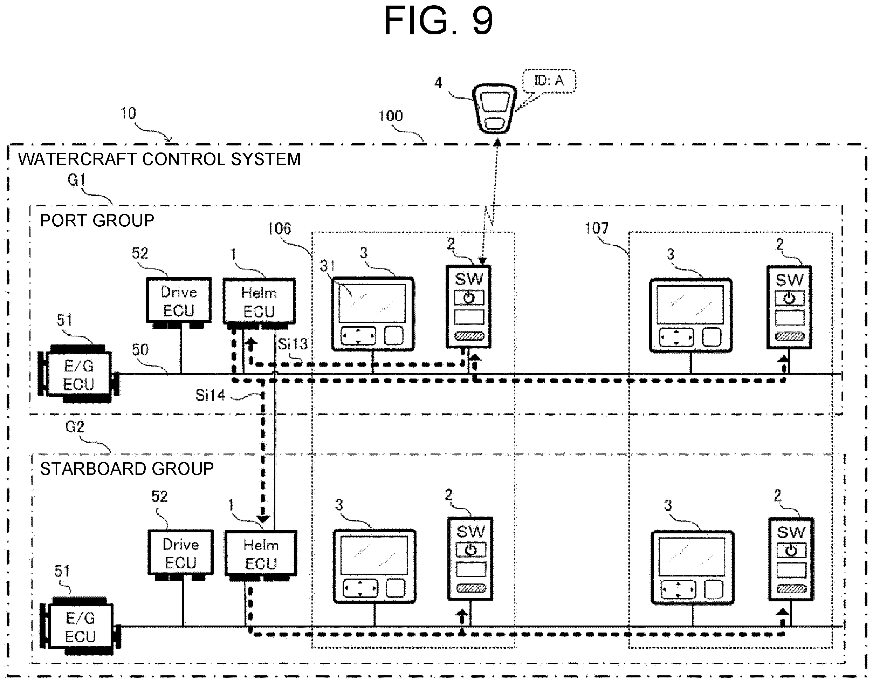

Then, as illustrated in Fig. 9, the user holds the electronic key 4, to which the identification information "A" is assigned, over any one of the switch panels 2 in the registration standby state. In Fig. 9, as an example, the electronic key 4 is held over the switch panel 2 that belongs to the (port) group G1 and is arranged in the cockpit 106. However, the present disclosure is not limited to this example, and the user may hold the electronic key 4 over any of the switch panels 2. When the electronic key 4 is held over any of the switch panels 2, the reading section 21 of this switch panel 2 communicates with the electronic key 4 and executes the reading processing to read the identification information "A" from the electronic key 4. Furthermore, this switch panel 2 sends a read signal Si13 including the read identification information "A" to the main control section 1 that belongs to the same group G1.

When the main control section 1 receives the read signal Si13, the registration processing section 12 sends a registration signal Si14 to all of the plural (four herein) switch panels 2. The registration signal Si14 is a signal that includes the same identification information "A" as that in the read signal Si13. In this way, the identification information, which is read by any of the plural switch panels 2 in the registration standby state, is transferred to all of the plural switch panels 2 in the registration standby state. Strictly speaking, since the communication between the devices belonging to the group G1 and the devices belonging to the group G2 is made by the main control sections 1, the registration signal Si14 to the two switch panels 2 belonging to the group G2 is transferred from the main control section 1 in the group G1 through the main control section 1 in the group G2.

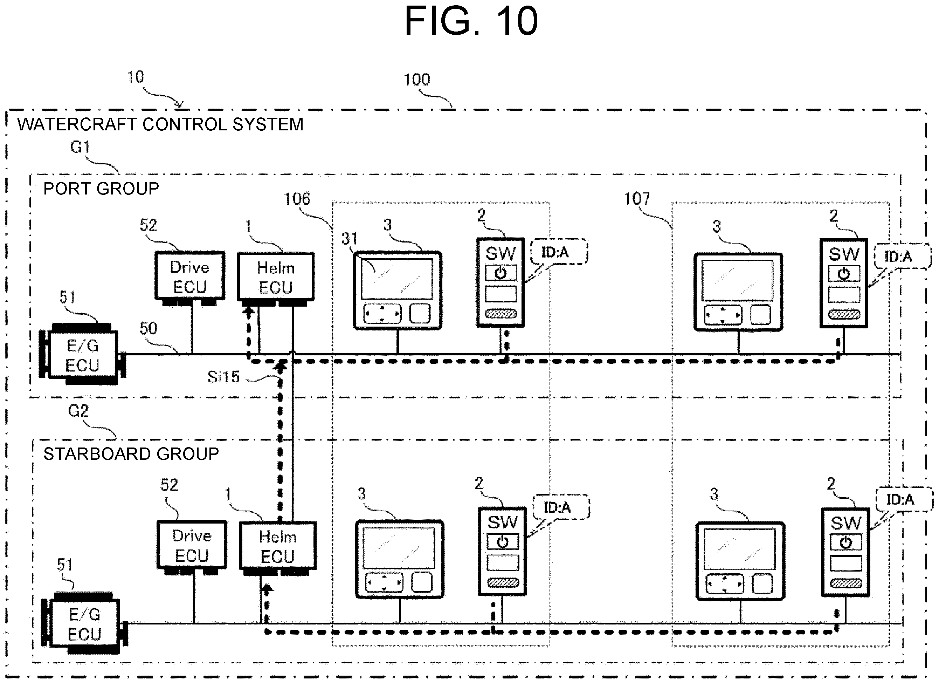

The plural switch panels 2, each of which is in the registration standby state and receives the registration signal Si14, each execute the registration processing to register (store) the identification information "A", which is included in the registration signal Si14, as the authentication information in the registration section 23. In this way, as illustrated in Fig. 10, the same identification information "A" is registered as the authentication information in the registration sections 23 of the plural (four herein) switch panels 2. At this time, the switch panels 2, each of which has registered the authentication information, sends a completion signal Si15 to the main control section 1 as the sending source of the registration signal Si14. When receiving the completion signal Si15, the main control section 1 confirms that the registration of the identification information is successfully completed.

In this embodiment, in the registration mode, after the registration of one piece of the identification information is completed, the identification information can be registered one after another simply by holding the electronic key 4, to which the next identification information is assigned, over the switch panel 2. That is, the plural switch panels 2 remain in the registration standby state until the termination of the registration mode. Thus, after the registration of the identification information "A" is completed, the user registers the identification information "B" as the authentication information by the same procedure as the above procedure by holding the electronic key 4 with the identification information "B" over any one of the switch panels 2. Similarly, after the registration of the identification information "B" is completed, the user registers the identification information "C" as the authentication information by the same procedure as the above procedure by holding the electronic key 4 with the identification information "C" over any one of the switch panels 2. As a result, three pieces of the authentication information, which are the identification information "A", "B", and "C", are registered.

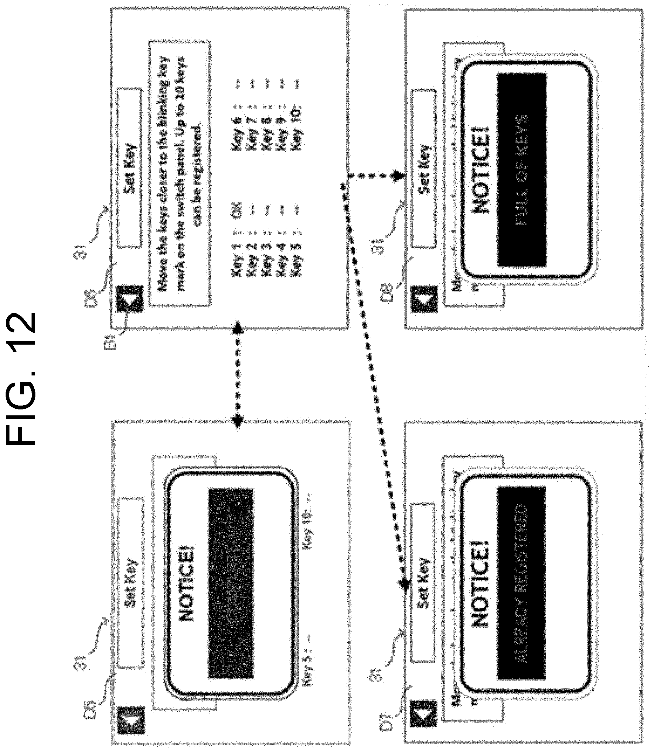

Fig. 11 and Fig. 12 are explanatory views (screen transition views), each of which illustrates an example of a transition state of the screen shown on the display section 31 of the terminal device 3 in relation to the registration function. Each of the screens illustrated herein merely constitutes one example. Thus, a display content, a layout, and the like thereof can appropriately be changed.

Fig. 11 illustrates transition of the screen until the registration mode is started. On the menu screen D1 illustrated in Fig. 11, when the mode switching operation is performed to switch the operation mode of the watercraft control system 100 to the "registration mode", the screen of the display section 31 transitions to a confirmation screen D2. The confirmation screen D2 is a pop-up screen showing a condition under which switching to the registration mode is allowed (in this embodiment, that the electric power supply on each of the port side and the starboard side is "on"). When an "OK button" is operated on the confirmation screen D2, the screen of the display section 31 transitions to a caution screen D3. The caution screen D3 is a pop-up screen showing that registration of a key identification number is started. When an "OK button" is operated on the caution screen D3, the screen of the display section 31 transitions to a registration screen D4. The registration screen D4 is a screen that shows a registration status of the identification number.

In this embodiment, as an example, in this implementation, up to 10 pieces of the identification information can be registered as the authentication information. Thus, the registration statuses (registered/not registered) of 10 pieces of the identification information "Key 1 to Key 10" are shown on the registration screen D4. The registration screen D4 illustrated in Fig. 11 indicates that none of the authentication information is registered (not registered). In the state where the registration screen D4 is shown on the display section 31, the switch panel 2 is in the registration standby state.

When the electronic key 4 is held over any one of the switch panels 2 while the registration screen D4 is shown, and the identification information is successfully registered, the screen of the display section 31 transitions to a completion screen D5 illustrated in Fig. 12. The completion screen D5 is a pop-up screen showing that the identification information is successfully registered. When a certain time period elapses after the display of the completion screen D5, the screen of the display section 31 transitions to a registration screen D6. The registration screen D6 illustrated in Fig. 12 indicates that the first identification information is registered as the authentication information by a notation "Key 1: OK". When the electronic key 4 is held over any one of the switch panels 2 while the registration screen D6 is shown, and the identification information is successfully registered, the screen of the display section 31 transitions to the completion screen D5 again. Meanwhile, when the registration of all pieces of the identification information to be registered is completed, the user terminates the registration mode by operating a back button B1 in the registration screen D6.

When the electronic key 4 that has already been registered is held over any one of the switch panels 2 while the registration screen D6 is shown, the screen of the display section 31 transitions to a duplicate error screen D7. The duplicate error screen D7 is a pop-up screen showing that the read identification information has already been registered. Meanwhile, when the electronic key 4 is newly held over any one of the switch panels 2 while the registration screen D6 is shown and the maximum number (10 pieces in this embodiment) of the authentication information is already registered, the screen of the display section 31 transitions to an upper limit error screen D8. The upper limit error screen D8 is a pop-up screen showing that the number of the registered identification information reaches the upper limit.

In this embodiment, the main control section 1 only transfers (relays) the identification information that is read by the reading section 21, and thus the identification information is not registered (stored) in the main control section 1. For this reason, the identification information as the authentication information is managed locally. Thus, compared to a case where the identification information is managed by the main control section 1, it is possible to enhance the security for the authentication. However, the present disclosure is not limited thereto, and the identification information may be registered (stored) in the main control section 1.

As it has been described so far, the control method (for the watercraft 10) according to this embodiment is used for the watercraft 10 including the devices, each of which requires the authentication of the identification information for the activation, and has the reading processing, the authentication processing, and the registration processing. In the reading processing, the identification information is read by the reading section 21 that is mounted on the hull 101 of the watercraft 10 and can read the identification information. In the authentication processing, the identification information that is read in the reading processing is authenticated by referring to the authentication information. In the registration processing, the identification information is registered as the authentication information. In the registration processing, the plural pieces of the authentication information can be registered.

According to this aspect, it is possible to provide the plural users with the electronic keys 4, to each of which the individual identification information is assigned, by registering plural pieces of the authentication information, for example. Thus, for example, even in the case where the plural users the watercraft 10 jointly, each of the individual users can the watercraft 10 by using the unique identification information.

In this embodiment, in the registration processing, the identification information is read by any one of the plural reading sections 21, and the identification information is thereby registered as the authentication information. Accordingly, for example, even in the case where the hull 101 of the watercraft 10 is relatively large, or the like, the user only needs to cause the closest reading section 21 to the user among the plural reading sections 21 to read the identification information when registering the authentication information. In this embodiment, in particular, the identification information, which is read by (the reading section 21 of) the single switch panel 2, is transferred to all of the plural (four herein) switch panels 2 that belongs to the two groups G1, G2 or more, and is registered all at once as the authentication information in the registration sections 23 of all of these plural switch panels 2.

When the specific mode switching operation is accepted, the registration mode is started to execute the registration processing. Thus, for example, the user can register the authentication information when the user himself/herself performs the mode switching operation. As a result, the authentication information can easily be added.

At the start of the registration processing, it is determined whether the status of the watercraft 10 satisfies the registration enable condition. If the status of the watercraft 10 satisfies the registration enable condition, the registration processing is started. In short, as described above, as an example, the registration processing can be started only in the case where the registration enable the condition that the electric power supply for the devices on each of the port side and the starboard side of the hull 101 is "on" is set as the registration enable condition and the registration enable condition is satisfied. Accordingly, the authentication information cannot be registered unless the registration enable condition is satisfied. Thus, it is possible to inhibit registration of unauthorized authentication information.

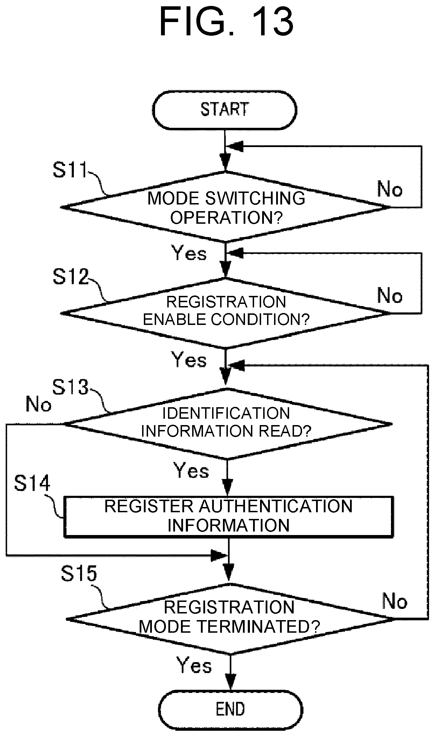

The control method (for the watercraft 10) related to the registration function that has been described so far will be summarized in a flowchart illustrated in Fig. 13.

That is, in the control method according to this embodiment, first, it is determined whether the mode switching operation is performed on any one of the plural (four herein) terminal devices 3 (S11). If the mode switching operation is not performed (S11: No), the processing in step S11 is repeated in the control method. If the mode switching operation (S11: Yes), in the control method, it is determined whether the registration enable condition is satisfied (S12). For example, in the case where the registration enable condition is that the electric power supply for the devices on each of the port side and the starboard side of the hull 101 is "on", and the electric power supply for the devices on each of the port side and the starboard side of the hull 101 is "on", the registration enable condition is satisfied (S12: Yes). Thus, the processing proceeds to step S13. On the other hand, in the case where the electric power supply is "off" on at least one of the port side and the starboard side of the hull 101, the registration enable condition is not satisfied (S12: No). As a result, the processing in step S12 is repeated.

In step S13, it is determined whether the identification information is read. Here, when the user holds the electronic key 4 over the switch panel 2, the reading section 21 executes the reading processing (S13: Yes), and the processing proceeds to step S14. On the other hand, in the case where the user does not hold the electronic key 4 over the switch panel 2, the reading processing is not executed (S13: No). As a result, the processing proceeds to step S15 in the control method. In step S14, the registration processing section 12 of the main control section 1 sends the registration signal Si14, which includes the identification information, to the plural switch panels 2 in the registration standby state. Then, the registration section 23 of the switch panel 2 registers the identification information as the authentication information. In step S15, in the control method, it is determined whether an operation to terminate the registration mode is performed by the user. If the registration mode is not terminated (S15: No), the processing returns to step S13 in the control method. On the other hand, if the registration mode is terminated (S15: Yes), a series of the processing in the control method related to the registration function is terminated.

The watercraft control system 100 repeatedly executes the processing in above steps S11 to S15. However, the flowchart illustrated in FIG. 13 is merely one example. Thus, the processing may appropriately be added or omitted, and an order of the processing may appropriately be changed.

In the control method related to the registration function, it is not essential to execute the activation permission processing in which the device is brought into the activatable state when the identification information read by any one of the plural reading sections 21 is successfully authenticated. In the first place, it is not essential that the watercraft 10 includes the plural reading sections 21.

### [3.3] Other functions

The control method (for the watercraft 10) according to this embodiment further has a function of editing (including deleting, adding, updating, and the like) the authentication information that is registered in the registration processing. In this way, for example, in the case where the registered authentication information has to be edited due to loss of the electronic key 4, a user change, or the like, it is possible to handle such need.

Here, in regard to the deletion of the registered authentication information, in this embodiment, the plural pieces of the authentication information that are registered in the registration processing are deleted all at once. In other words, the plural pieces of the authentication information can be registered in the registration processing. However, it is impossible to delete only some (an individual piece(s)) of the plural pieces of the registered authentication information, and the plural pieces of the registered authentication information can only be deleted all at once. With such a configuration, since all pieces of the authentication information is deleted, inevitably, the authentication information has to be registered again, and thus the security can be enhanced.

More specifically, when deleting the authentication information, the user performs a deletion operation for any one of the plural (four herein) terminal devices 3. In order to perform the deletion operation, it is necessary to authenticate the identification information so as to turn "on" the electric power supply for the devices on each of the port side and the starboard side of the hull 101 and thereby satisfy the registration enable condition. The terminal device 3 that accepts the deletion operation sends a deletion request signal to the main control section 1 that belongs to the same group G1. Then, when receiving the deletion request signal, the main control section 1 sends the deletion request signal to all of the plural (four herein) switch panels 2, and causes the registration section 23 of each of the plural switch panels 2 to delete all the identification information that are registered as the authentication information.

The control method (for the watercraft 10) according to this embodiment further has a switching function to a forced activation mode in which the electric power supply for the specific device can be turned "on" without authenticating the identification information. In this way, for example, even under a circumstance where the identification information cannot be authenticated due to loss of all the electronic keys 4, or the like, it is possible to forcibly turn on the electric power supply for each of the devices in the watercraft 10 and thus to register the authentication information, and the like. However, the device that can be brought into the activatable state (a state where the electric power supply can be turned "on" by the user operation) in the forced activation mode is limited to the device (a non-power source) that is not used to propel the hull 101. As an example, the forced activation mode can be implemented when any one of the plural switch panels 2 is replaced with the switch panel 2 whose function (immobilizer function) to authenticate the identification information is disabled. By performing the activation operation for the switch panel 2 whose function (immobilizer function) to authenticate the identification information is disabled, it is possible to bring some of the devices into the activatable state without authenticating the identification information.

That is, in this embodiment, the devices include the power source 104 used to propel the hull 101 and the non-power source. In the forced activation mode in which the device is brought into the activatable state without executing the authentication processing, only the non-power source of the device is brought into the activatable state. Here, the non-power sources include the switch panel 2, the terminal device 3, and the like. Just as described, in the forced startup mode, since the power source 104 that is used to propel the hull 101 cannot be activated, the forced activation mode leads to prevention of theft and the like by which the watercraft 10 is forcibly moved.

### [4] Modified Examples

A description will hereinafter be made on modified examples of the first embodiment. The modified examples, which will be described below, can be applied in appropriate combinations.

The watercraft control system 100 in the present disclosure includes the computer system. The computer system has, as the main component, the one or more processors and one or more units of the memory as hardware. When the processor executes the program that is recorded in the memory of the computer system, the functions as the watercraft control system 100 in the present disclosure are implemented. The program may be recorded in advance in the memory of the computer system, may be provided through an electric communication line, or may be recorded in a non-transitory recording medium, such as a memory card, an optical disk, or a hard disk drive that can be read by the computer system. Some or all of the functional sections included in the watercraft control system 100 may each be constructed of an electronic circuit.

It is not an essential configuration for the watercraft control system 100 that at least some of the functions of the watercraft control system 100 are integrated in a single casing, and the components of the watercraft control system 100 may separately be provided in plural casings. On the contrary, the functions that are distributed to the plural devices (for example, the switch panel 2 and the terminal device 3) in the first embodiment may be consolidated in a single casing.

The present disclosure is not limited to the configuration that at least a part of the watercraft control system 100 is mounted on the hull 101. However, at least a part of the watercraft control system 100 may separately be provided from the hull 101. As an example, in the case where the main control section 1 of the watercraft control system 100 is embodied by a server device that is separately provided from the hull 101, the watercraft control system 100 can control the watercraft 10 (the hull 101) through communication between the server device and (the communication device of) the hull 101. At least some of the functions of the watercraft control system 100 may be implemented by a cloud (cloud computing) or the like.

The watercraft 10 is not limited to the pleasure boat, and may be a commercial vessel such as a cargo vessel or a passenger vessel, a workboat such as a tugboat or a salvage boat, a special vessel such as a meteorological observation vessel or a training vessel, a fishing vessel, a naval vessel, or the like. Furthermore, the watercraft 10 is not limited to the watercraft of the manned type boarded by the navigator, and may be a watercraft of an unmanned type that can be operated remotely by a person (the navigator) or operated autonomously.

It is not essential to provide the plural authentication sections 22 in a manner to correspond to the plural reading sections 21. For example, the only one authentication section 22 may be provided. In this case, the identification information, which is read by any one of the plural reading sections 21, is sent to this authentication section 22, and the authentication processing is executed by the authentication section 22.

The configuration of the reading section 21 is not limited to the configuration of communicating with the electronic key 4 by a short-distance wireless communication method and reading the identification information. For example, the reading section 21 may be configured to communicate with the electronic key 4 by a wired communication method or an optical communication method and read the identification information. Furthermore, the identification information is not limited to the information (the data) that is stored in the memory, and may be optically readable information such as a two-dimensional code, for example.

The electronic key 4 may be integrated with a mechanical key, or may be a general-purpose information terminal such as a card key, an electronic tag, a dedicated mobile terminal, or the smartphone.

It is not essential that the watercraft 10 includes the plural devices that are classified into the two groups G1, G2 or more. In addition, it is not essential that the plural devices can be activated for each of the groups G1, G2 and that the activation permission processing is executed all at once for the two groups G1, G2 or more. Furthermore, it is not essential that the authentication processing is executed by each of the plural authentication sections 22 provided in the manner to correspond to the plural reading sections 21 and that, when any one of the plural authentication sections 22 succeeds in the authentication, such an authentication section 22 makes notification to the other authentication sections 22. Moreover, it is not essential that, when the activation of the certain device in the activatable state is requested, such a device is activated without additionally executing the authentication processing.

It is not essential that, in the registration processing, the identification information is read by any one of the plural reading sections 21 and the identification information is thereby registered as the authentication information. In addition, it is not essential that, when the specific mode switching operation is accepted, the registration mode is started to execute the registration processing. Furthermore, it is not essential to determine, at the start of the registration processing, whether the status of the watercraft 10 satisfies the registration enable condition. Moreover, it is not essential that the plural pieces of the authentication information registered in the registration processing are deleted all at once. The plural pieces of authentication information may be deleted individually. In the forced activation mode in which the device is brought into the activatable state without executing the authentication processing, it is not essential to bring only the non-power source of the device into the activatable state.

### (Second Embodiment)

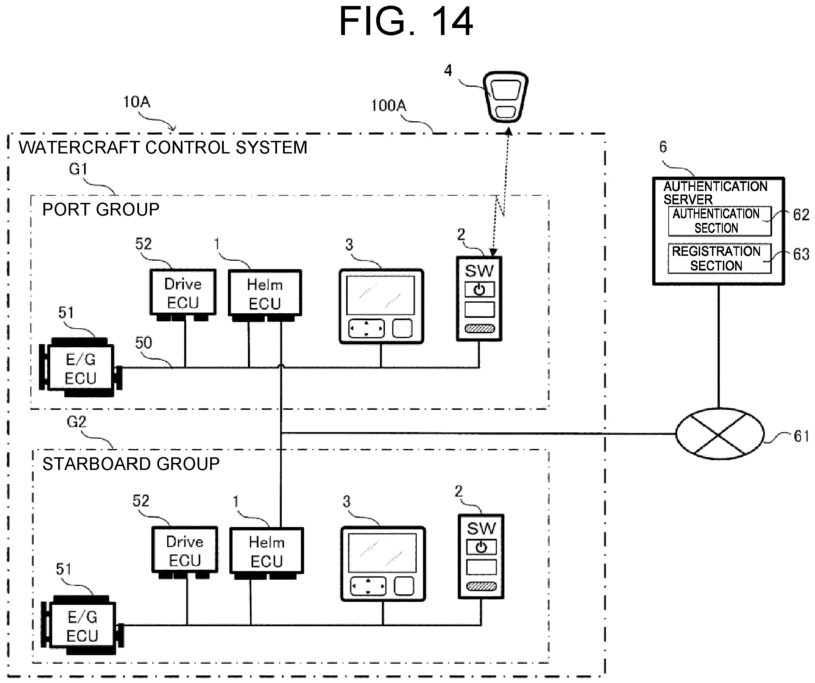

As illustrated in Fig. 14, a watercraft control system 100A according to this embodiment differs from the watercraft control system 100 according to the first embodiment in a point that an authentication section 62 authenticating the identification information is provided outside the watercraft control system 100A. Hereinafter, the same components as those in the first embodiment will be denoted by the same reference signs, and the description thereon will appropriately be omitted.

In this embodiment, the authentication section 62 and a registration section 63 are provided in an authentication server 6 instead of the switch panel 2. The main control section 1 of the watercraft control system 100A that is mounted on a watercraft 10A is configured to be communicable with the authentication server 6 via a carrier network or a public network 61 such as the Internet, for example.

That is, in this embodiment, the identification information that is read by the reading section 21 of the switch panel 2 is sent from the main control section 1 to the authentication server 6, and is then authenticated by the authentication section 62 of the authentication server 6. The authentication section 62 performs authentication of the identification information (the authentication processing) by referring to the authentication information that is registered in the registration section 63. In addition, the registration section 63 of the authentication server 6 executes the registration processing to register plural pieces of the identification information as the authentication information for the single watercraft 10A.

In the example illustrated in Fig. 14, such a configuration that only one cockpit is provided in the hull 101 is assumed. A pair of the switch panel 2 and the terminal device 3 is provided in each of the (port) group G1 and the (starboard) group G2. However, the present disclosure is not limited to such a configuration. Similar to the first embodiment, the switch panel 2 and the terminal device 3 may be installed in each of the two cockpits 106, 107.

The configuration in the second embodiment can be employed in combination with the various configurations

(including the modified examples) described in the first embodiment as appropriate.

### REFERENCE SIGNS LIST

2 Switch panel (device, non-power source)
3 Terminal device (device, non-power source)
10, 10A Watercraft
11 Activation permission processing section
21 Reading section
22, 62 Authentication section
100, 100A Watercraft control system
101 Hull
104 Power source (device)
G1, G2 Group

## Claims

1. A control method for a watercraft (10),
the control method being used for a watercraft (10) including a device that requires authentication of identification information for activation, the control method comprising:
reading processing to read the identification information by a reading section (21) that are mounted on a hull (101) of the watercraft (10) and can read the identification information;
authentication processing to authenticate the identification information, which is read in the reading processing, by referring to authentication information; and
activation permission processing to bring the device into an activatable state in the case where the identification information, which is read by the reading section (21), is successfully authenticated, wherein
the device comprises a power source (104) that is used to propel the hull (101) and a non-power source, and wherein
in the forced activation mode in which the device is brought into the activatable state without executing the authentication processing, only the non-power source of the device is brought into the activatable state.

2. The control method for a watercraft (10) according to claim 1, further comprising plural reading section (21), and the control method comprises activation permission processing to bring the device into an activatable state in the case where the identification information, which is read by any one of the plural reading sections (21), is successfully authenticated.

3. The control method for a watercraft (10) according to claim 2, wherein
the authentication processing is executed by each of plural authentication sections (22, 62) that are provided in a manner to correspond to the plural reading sections (21), and, when any one of the plural authentication sections succeeds in authentication, such an authentication section makes a notification to the rest of the authentication sections.

4. The control method for a watercraft (10) according to any one of claims 1 to 3, wherein
in the case where activation of the device in the activatable state is requested, the device is activated without additionally executing the authentication processing.

5. The control method for a watercraft (10) according to any one of claims 1 to 4 further comprising:
registration processing to register the identification information as the authentication information, wherein
in the registration processing, plural pieces of the authentication information can be registered.

6. The control method for a watercraft (10) according to claim 5, wherein
in the registration processing, the identification information is read by any one of the plural reading sections (21), and the identification information is thereby registered as the authentication information.

7. The control method for a watercraft (10) according to claim 5 or 6, wherein
the plural pieces of the authentication information that are registered in the registration processing are deleted all at once.

8. The control method for a watercraft (10) according to any one of claims 5 to 7, wherein
when a specific mode switching operation is accepted, a registration mode for executing the registration processing is started.

9. The control method for a watercraft (10) according to any one of claims 5 to 8, wherein
at a start of the registration processing, it is determined whether a status of the watercraft (10) satisfies a registration enable condition, and in the case where the registration enable condition is satisfied, the registration processing is started.

10. The control method for a watercraft (10) according to any one of claims 1 to 9, wherein
the watercraft (10) includes a plurality of the devices that are classified into two or more groups,
the plural devices can be activated for each of the groups, and
the activation permission processing is executed for the two or more groups all at once.

11. A watercraft control program for causing one or more processors to execute the control method for a watercraft according to any one of claims 1 to 10.

12. A watercraft control system (100),
The watercraft control system (100) being used for a watercraft (10) including a device that requires authentication of identification information for activation, the watercraft control system (100) comprising:
a reading section (21), which is mounted on a hull (101) of the watercraft (10) and can read the identification information;
an authentication section (22, 62) that authenticates the identification information by referring to the authentication information; and
an activation permission processing section (11) that brings the device into an activatable state in the case where the identification information, which is read by the reading section (21), is successfully authenticated, wherein
the device comprises a power source (104) that is used to propel the hull (101) and a non-power source, and wherein
in the forced activation mode in which the device is brought into the activatable state without executing the authentication processing, only the non-power source of the device is brought into the activatable state.

13. A watercraft (10) comprising:
the watercraft control system (100) according to claim 12; and
the hull (101).
